# EUROPEAN PATENT APPLICATION

(11) **EP 4 451 238 A1**
(43) Date of publication of application: **23.10.2024**
(21) Application number: 23780058.6
(22) Date of filing: 23.03.2023
(51) Int. Cl.: G07C 5/08

(54) **VIDEO RECORDING DEVICE**

(30) Priority: 28.03.2022 JP 2022051608
(71) Applicant: Hitachi Construction Machinery Co., Ltd., Tokyo 110-0015 (JP)
(72) Inventor: TAGO Hisashi, Tsuchiura-shi, Ibaraki 300-0013 (JP); HIGURASHI Masaki, Tsuchiura-shi, Ibaraki 300-0013 (JP); TANAKA Masamichi, Tsuchiura-shi, Ibaraki 300-0013 (JP); ARAI Masatsugu, Tsuchiura-shi, Ibaraki 300-0013 (JP); SAITO Risa, Tsuchiura-shi, Ibaraki 300-0013 (JP); SAKAI Daito, Tsuchiura-shi, Ibaraki 300-0013 (JP); SATO Kiichi, Tsuchiura-shi, Ibaraki 300-0013 (JP)
(74) Representative: Manitz Finsterwald Patent- und Rechtsanwaltspartnerschaft mbB
(86) International application number: PCT/JP2023/011540
(87) International publication number: WO 2023/190047

(57) **Abstract**

A close call is surely extracted at a site where a construction machine is used. A recording section 33, a trigger determination section 32, and a video recording management section 31 are included, the recording section 33 where video data is transitorily or non-transitorily recorded, the trigger determination section 32 determining whether a video recording trigger is enabled, the video recording management section 31 non-transitorily recording, in the recording section 33, the video data for a predetermined period of time before and after a point in time when the video recording trigger is enabled, of the video data transitorily recorded in the recording section 33, when it is determined that the video recording trigger is enabled. The trigger determination section 32 determines that the video recording trigger is enabled when an object is detected by an object detection sensor attached to a vehicle body and a predetermined operation performed on the construction machine is restricted.

## Description

### Technical Field

The present invention relates to a video recording device mounted on a construction machine.

### Background Art

In automobiles, as disclosed in, for example, Patent Literature 1, for the purpose of investigating the cause of the occurrence of an accident, a recording device is typically used that records video of the surroundings by means of a camera attached to a vehicle body and stores video data. In recent years, vehicle body data with a CAN signal or the like as well as video is stored by associating them with each other, so that the situation can be identified in more detail.

It is also effective to mount a video recording device on a construction machine, as well as an automobile, for investigating the cause of the occurrence of an accident or reviewing a close call.

### Citation List

### Patent Literature

Patent Literature 1: JP Patent No. 4394780

### Summary of Invention

### Technical Problem

When a video recording device records video captured throughout the entire period of time of machine operation, various problems occur, such as unnecessary data occupying the memory capacity of the video recording device, necessary data overwritten and erased, or heavier workload for searching data at the time of the occurrence of an accident. Therefore, it is preferable to improve the accuracy of extracting a close call by executing a trigger at necessary recording timing. Although automobiles typically use a brake signal, an impact on a vehicle body, or the like as a trigger, such a trigger as used in the automobiles is not suitable for construction machines since workers and machinery are always present around the construction machines and in some operation, impacts are constantly exerted on the construction machines. Therefore, it is required to surely extract close calls on sites where the construction machines are used.

### Solution to Problem

To solve the aforementioned problems, a video recording device according to the present invention includes a recording section where the video data is transitorily or non-transitorily recorded; a trigger determination section that determines whether a video recording trigger is enabled; and a video recording management section that non-transitorily records, in the recording section, the video data for a predetermined period of time before and after a point in time when the video recording trigger is enabled, of the video data transitorily recorded in the recording section, when it is determined that the video recording trigger is enabled, in which the trigger determination section is configured to determine that the video recording trigger is enabled when an object is detected by an object detection sensor attached to the vehicle body and a predetermined operation performed on the construction machine is restricted.

### Advantageous Effects of Invention

With the adoption of the aforementioned configuration, a trigger is enabled at necessary recording timing so that extraction accuracy for close calls can be improved.

Further features related to the present invention will become apparent from the description of the present specification and the attached drawings. The problems, configurations, and advantageous effects other than those described above will also become apparent from the description of the following embodiment.

### Brief Description of Drawings

Fig. 1 is a view showing the structure of a construction machine including a camera and an object detection sensor.
Fig. 2 is a block diagram showing the functional configuration of the camera and the object detection sensor included in the construction machine.
Fig. 3 is a functional block diagram of a video recording device and a vehicle body controller according to the present invention.
Fig. 4 is a timing chart showing the conditions under which a video recording function is enabled.
Fig. 5 is a flowchart showing processing of producing video data.
Fig. 6 is a flowchart showing processing of determining a video recording trigger.

### Description of Embodiment

Hereinafter, an embodiment of the present invention will be described with reference to the drawings.

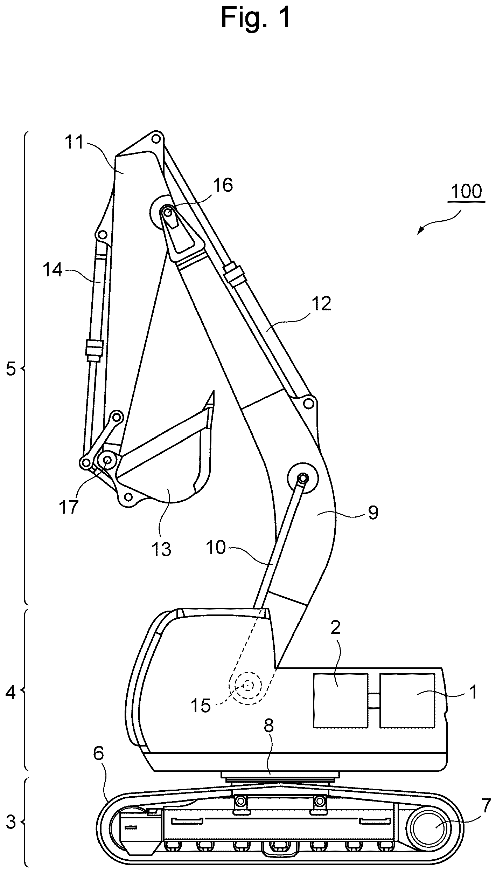

Fig. 1 shows a construction machine 100 including a video recording device according to the present invention.

In the construction machine 100, an engine 1 as a motor and a main pump 2 driven by the engine 1 are mounted, and a lower travel body 3, an upper swing body 4, and a front device 5 independently operate with a hydraulic oil delivered by the main pump 2.

The lower travel body 3 drives and controls a pair of crawler belts 6 (the belt only on one side shown in Fig. 1) by means of a travel hydraulic motor 7.

The upper swing body 4 is swingably connected to the lower travel body 3 and a swing hydraulic motor 8 drives and controls the upper swing body 4.

The front device 5 is mounted on the upper swing body 4 and includes a boom 9, a boom cylinder 10 for driving the boom 9, an arm 11, an arm cylinder 12 for driving the arm 11, a bucket 13, and a bucket cylinder 14 for driving the bucket 13. The cylinders expand and contract with the hydraulic oil delivered from the main pump 2 to respectively actuate a rotation axis 15 of the upper swing body 4 and the boom 9, a rotation axis 16 of the boom 9 and the arm 11, and a rotation axis 17 of the arm 11 and the bucket 13 so as to perform operations, such as excavation and land leveling.

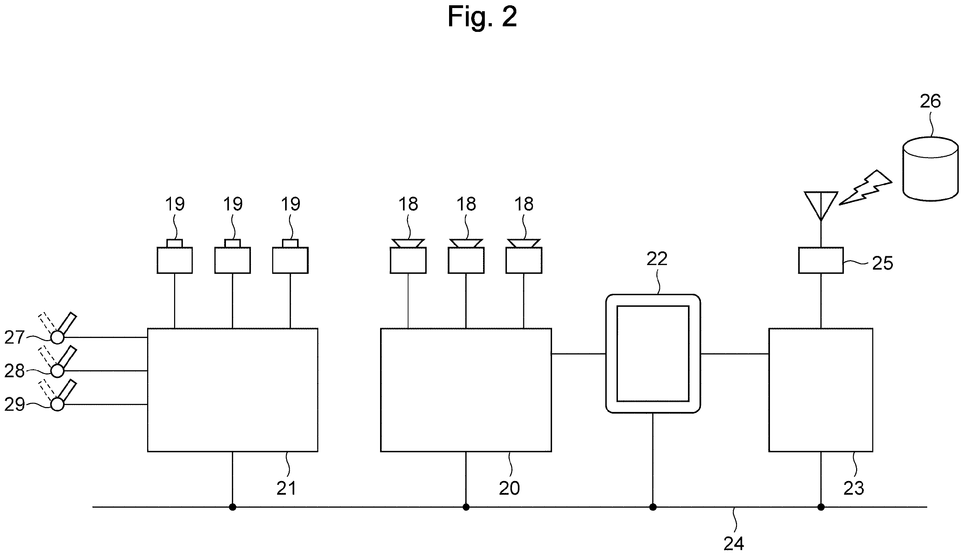

Fig. 2 is a block diagram showing the functional configuration of a camera and an object detection sensor that are mounted on the construction machine 100.

On the exterior of a driver seat of the construction machine 100, a plurality of cameras 18 for monitoring the surroundings and a plurality of object detection sensors 19 for monitoring the surroundings are mounted. On the interior of the driver seat, a monitor controller 20, a vehicle body controller 21, a monitor 22, and a video recording device 23 are mounted.

One or more cameras 18 are arranged in a periphery of a vehicle body so that video of the entire surroundings of the construction machine 100 can be acquired. The camera 18 is connected to the monitor controller 20 and transmits the acquired video to the monitor controller 20. The camera 18 constantly acquires the video of the surroundings of the construction machine 100 so as to be able to transmit the video to the monitor controller 20 in real time.

The object detection sensor 19 includes an infrared ray sensor, an ultrasonic sensor, a radar, LiDAR (Light Detection and Ranging), a camera, or the like. One or more object detection sensors 19 are arranged in the periphery of the vehicle body so that objects present across the entire surroundings of the construction machine 100 can be detected. The object detection sensor 19 measures the distance to a detected object and the direction in which the object is detected so as to be able to determine the position of the detected object. The position of the object determined is a relative position of the object with respect to the construction machine 100. The object detection sensor 19 is connected to the vehicle body controller 21 and transmits the position information on the detected object to the vehicle body controller 21.

Each controller and the video recording device 23 can communicate with each other via an on-vehicle network 24 such as a CAN. Further, these are mounted inside the vehicle body, as an ECU including a CPU and a memory. In addition, the video recording device 23 includes a cache where video data captured by the camera 18 is transitorily recorded and a storage where part of the video data transitorily recorded is non-transitorily (in a non-volatile manner) recorded. The camera 18 is connected to the monitor controller 20 and the object detection sensor 19 is connected to the vehicle body controller 21. The monitor controller 20 synthesizes the surrounding video input from the camera 18 and outputs, to the monitor 22, video obtained by dividing the video of each camera 18 or video obtained by blending the boundary between the adjacent cameras 18, as a surrounding view. The monitor 22 displays the input synthesized video and further, outputs the video displayed on the monitor 22 to the video recording device 23. Note that the video data transitorily recorded in the video recording device 23 is recorded in the cache while the power of the video recording device 23 is on (in operation) and is erased when the power is turned off. The video data non-transitorily recorded in the storage is continuously recorded (saved) after the power is turned off.

The video recording device 23, to which a communication terminal 25 is connected, records the input video on the monitor 22 and vehicle body information carried on the on-vehicle network 24, and is connected to the Internet via the communication terminal 25 so as to enable both uploading to a server 26 and accessing the video recording device 23 from the server 26. The vehicle body controller 21 transmits a detection signal from the object detection sensor 19 to the video recording device 23 via the on-vehicle network 24. Upon receipt of the detection signal, the video recording device 23 non-transitorily records, in the storage, the video data and operation information data before and after the object detection that have been transitorily recorded in the cache, for a preset period of time. Further, vehicle body position data upon detection of the object that has been acquired by the communication terminal 25 is also simultaneously recorded so as to be associated with the recorded video data and operation information data.

The vehicle body controller 21 is a controller that performs hydraulic control of the machine and acquires operation amounts of a swing lever 27 and a travel lever 28 that are operated by an operator, and also acquires the state (locked state or unlocked state) of a gate lock device 29 that permits or prohibits vehicle body operation. The gate lock device 29 in the present embodiment is disposed as a gate lock lever, for example, and disables, in a locked state, operation of the operation lever so as to prohibit the vehicle body operation and enables, in an unlocked state, operation of the operation lever so as to permit the vehicle body operation. The gate lock lever is connected to the vehicle body controller 21 and transmits a gate lock signal indicating the operation state of the gate lock lever to the vehicle body controller 21. The gate lock signal may be a pulse signal indicating the state of the gate lock lever being on or off.

Further, in the present embodiment, when the gate lock device 29 is in an unlocked state and the object detection sensor 19 is in a state of detecting an object, it is highly likely that a person or an object is present around the vehicle body, and thus, the vehicle body controller 21 restricts the operations of the swing lever 27 and the travel lever 28 to prevent contact with the person or the object resulting from travel/swing operations. Specifically, the operations of the swing lever 27 and the travel lever 28 are disabled so as to bring the upper swing body 4 and the lower travel body 3 into a non-drive state or even if the swing lever 27 and the travel lever 28 are operated, the operation speeds of the upper swing body 4 and the lower travel body 3 are significantly reduced by limiting the operation speeds instructed by the levers.

Further, for example, in a case where while the operations of the swing lever 27 and the travel lever 28 are disabled by the vehicle body controller 21, these levers are operated, a signal notifying such a situation is transmitted to the video recording device 23. The video recording device 23 records, in the storage, the video data and the vehicle body data before and after the object detection that have been transitorily recorded in the cache, for a preset period of time, as with the time when the object detection signal is received.

The reason for this is as follows: for example, when it is assumed that the object detection sensor 19 has detected a person or the like present in a blind spot of an operator and the operations are disabled while the operator performs swing or travel operation without noticing such a situation, the swing and travel operations are performed if the operations remain enabled, and when it is assumed that the object detection sensor 19 has detected a person or the like present in a blind spot of the operator and the operations are restricted while the operator performs swing or travel operation without noticing such a situation, the swing and travel operations are performed at normal operation speeds in accordance with the lever operations if the operations are unrestricted. Such cases could potentially harm the detected person, that is, a so-called close call incident could occur. Therefore, such situations are recorded as video, so that measures to be subsequently taken can be prepared.

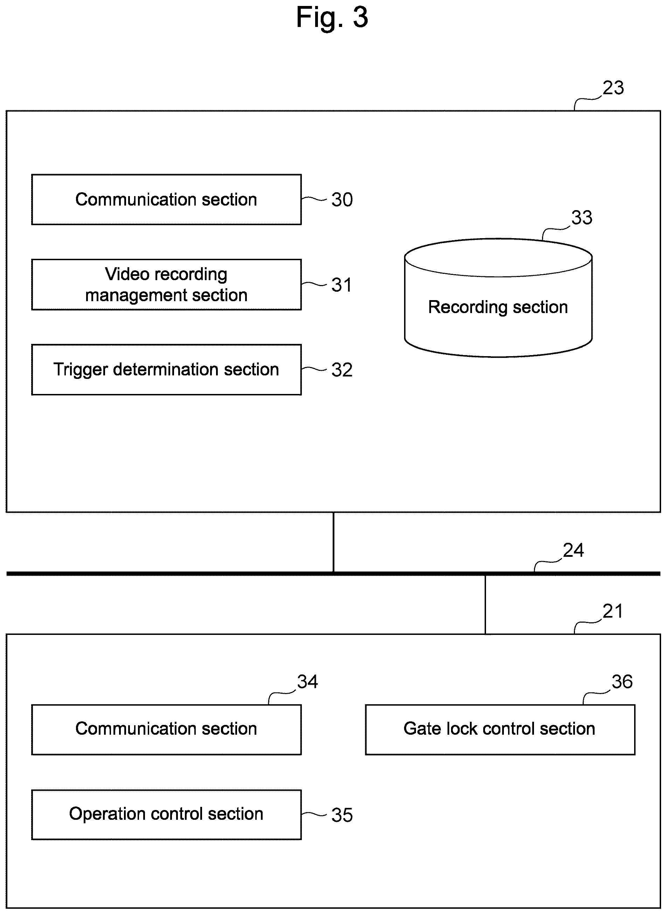

Fig. 3 is a functional block diagram of the video recording device 23 and the vehicle body controller 21 according to the present invention.

As shown in Fig. 3, the video recording device 23 is an ECU including a CPU and a memory as described above and includes a communication section 30, a video recording management section 31, and a trigger determination section 32 as functional sections that the CPU includes, and a recording section 33 as the memory. The recording section 33 includes a cache where video data is transitorily (in a volatile manner) recorded and a storage where video data is non-transitorily (in a non-volatile manner) recorded. The communication section 30 transmits and receives various data to and from the server 26 via the communication terminal 25, as well as various data to and from the vehicle body controller 21 via the on-vehicle network 24. When a video recording trigger is enabled, the video recording management section 31 performs processing of non-transitorily recording, in the storage in the same recording section 33, the video data for a predetermined period of time before and after a point in time when the video recording trigger was enabled, of the video data transitorily recorded in the cache of the recording section 33. The trigger determination section 32 determines whether the video recording trigger is enabled by the vehicle body controller 21, and outputs a command signal to cause the video recording management section 31 to start recording the video data when the video recording trigger is enabled.

The vehicle body controller 21 connected to the video recording device 23 via the on-vehicle network 24 includes a communication section 34, an operation control section 35, and a gate lock control section 36. The communication section 34 transmits and receives various data to and from the video recording device 23 via the on-vehicle network 24. The operation control section 35 acquires operation amounts of the swing lever 27 and the travel lever 28 that are operated by the operator and restricts the swing and travel operations under the conditions described later. The gate lock control section 36 acquires the state of the gate lock device 29 being locked/unlocked.

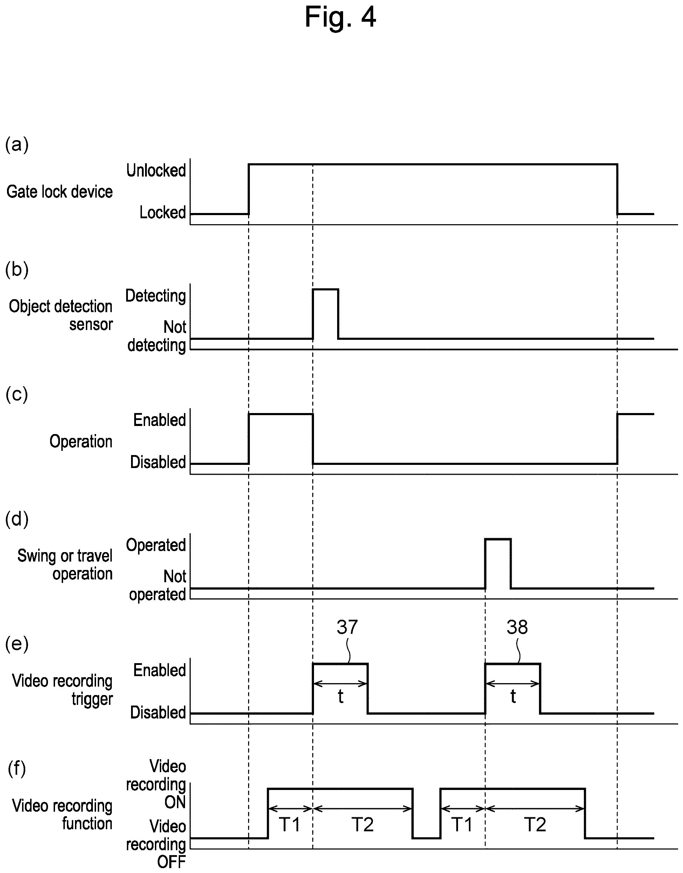

Fig. 4 is a chart for explaining the conditions under which the video recording device 23 starts recording the video data and a video recording time.

First, as shown in Fig. 4a and 4c, when the gate lock device 29 is turned into an unlocked state, the operation performed by an operator is enabled. Next, as shown in Fig. 4b, 4c, 4e, and 4f, upon detection of an object by the object detection sensor 19, swing and travel operations performed by the operator are restricted (disabled), and a video recording trigger (detection) 37 is enabled for t seconds. Of the video data transitorily recorded in the cache, the video data between times of T1 seconds before and T2 seconds after a time of generation of the video recording trigger (detection) 37 as a base point in time is non-transitorily (in a non-volatile manner) recorded.

When swing or travel operation is executed as shown in Fig. 4d in such a state in which swing and travel operations are restricted (disabled), a video recording trigger (disabled operation) 38 is enabled for t seconds, and the video data is non-transitorily (in a non-volatile manner) recorded, as with the time when the video recording trigger (detection) 37 is generated.

Finally, as shown in Figs. 4a, 4b, and 4c, when the gate lock device 29 is locked while the object detection sensor 19 is not in a state of detecting an object, the disabled operation state is released so that swing and travel operations performed by the operator are enabled, and the gate lock device 29 is unlocked again so that the swing and travel operations performed by the operator become available.

As described above, when the gate lock device 29 is in an unlocked state and the object detection sensor 19 has detected an object, the video recording trigger (detection) 37 is enabled. Further, after the video recording trigger (detection) 37 is enabled, when the swing lever 27 or the travel lever 28 is operated with the gate lock device 29 remaining unlocked while the object detection sensor 19 is not in a state of detecting an object or the like, the video recording trigger (disable operation) 38 is enabled. The video recording trigger (disabled operation) 38, even if enabled, is ignored until the video recording by the enabled video recording trigger (detection) 37 is completed in order to avoid overlapping the video recording processing.

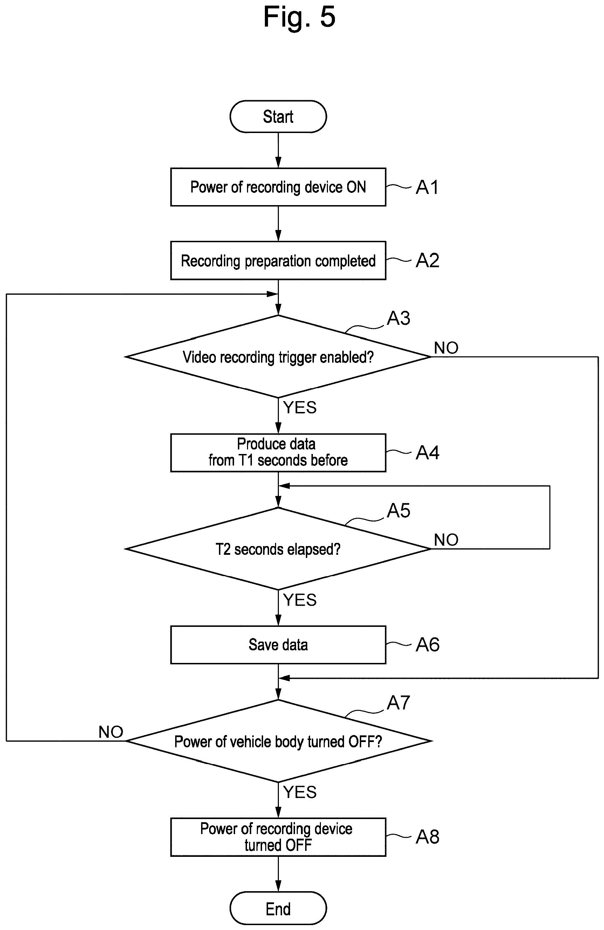

Fig. 5 shows a flowchart when the video recording device 23 records video data.

Upon the power of the vehicle body turned on, the power of the video recording device 23 is turned on in step A1, and recording preparation is performed (step A2).

In step A3, the trigger determination section 32 determines whether the video recording trigger is enabled. If the video recording trigger is enabled, the process proceeds to step A4, and if not, the process proceeds to step A7.

In step A4, the video recording management section 31 produces video data from the preset time of T1 seconds before the time when the video recording trigger was enabled as a base point in time.

In step A5, it is determined whether the preset time of T2 seconds has elapsed from the time when the video recording trigger was enabled as the base point in time. If T2 seconds have elapsed, the process proceeds to step A6, and if not, the process is on standby until T2 seconds elapse.

In step A6, the video data between the times of T1 seconds before and T2 seconds after the point in time when the video recording trigger was enabled, which was acquired between step A4 and step A5, is recorded in the storage of the recording section 33, and the process proceeds to step A7. Note that at this time, for accurately grasping the situation of the site where a close call has occurred in an analysis using the recorded data, it is preferable to also record the operation information (speed, moving direction, swing angle, and the like) and position information on the vehicle body at the time when the video recording trigger was enabled.

In step A7, if the power of the vehicle body is on, the process returns to A3, and determination of whether the video recording trigger is enabled and data production and recording are repeated. If the power of the vehicle body is off, the process proceeds to step A8.

In step A8, the power of the video recording device 23 is turned off and the video recording flow ends. At this time, the power of the vehicle body is off while the video recording device 23 is being driven by a battery power of another system. The power of the video recording device 23 is not turned off until the last data recording to the storage is completed.

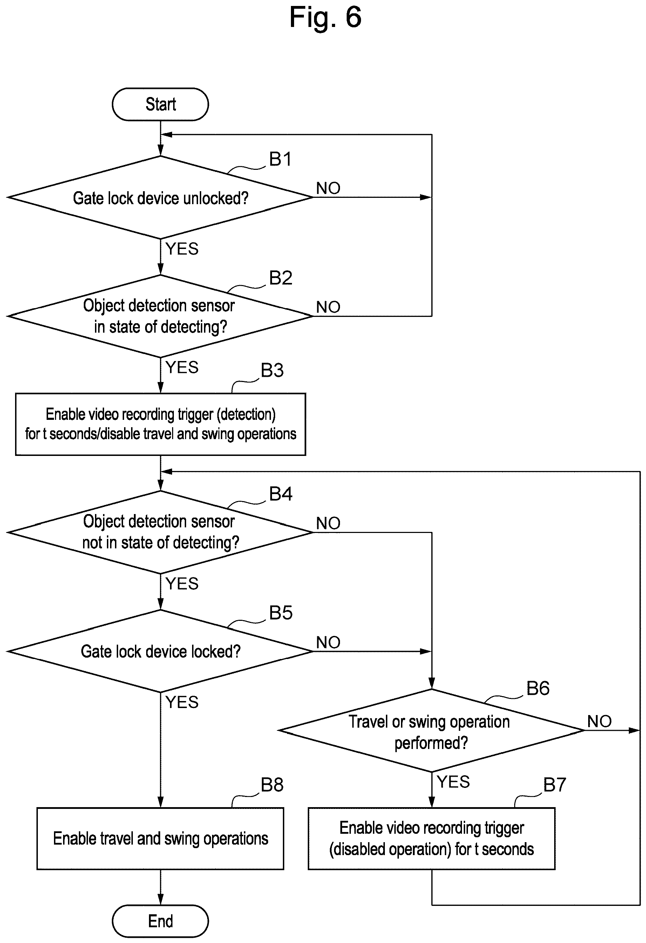

Fig. 6 shows a flowchart when the vehicle body controller 21 determines whether the video recording trigger is enabled/disabled. This control is executed concurrently with the video recording flow of Fig. 5.

First, in step B1, the gate lock control section 36 determines whether the gate lock device 29 is unlocked. If the gate lock device 29 is unlocked, the process proceeds to step B2, and if locked, the process is on standby maintaining the locked state.

In step B2, whether the object detection sensor 19 is in a state of detecting an object is determined based on whether the communication section 34 has received a detection signal. If the object detection sensor 19 is in a state of detecting an object, the process proceeds to step B3, and if not, the process returns to step B 1.

In step B3, the communication section 34 enables the video recording trigger (detection) for t seconds, and transmits a signal transmitting such a matter to the trigger determination section 32 of the video recording device 23. Further, the operation control section 35 restricts (disables) swing and travel operations performed by an operator, via the on-vehicle network 24.

In step B4, it is determined whether the object detection sensor 19 is not in a state of detecting an object, by performing the same processing as that of step B2. If the object detection sensor 19 is not in a state of detecting an object, the process proceeds to step B5, and if in a state of detecting an object, the process proceeds to step B6.

In step B5, the gate lock control section 36 determines whether the gate lock device 29 is locked. If locked, the process proceeds to step B8, and if unlocked, the process proceeds to step B6.

In step B6, the operation control section 35 determines whether restricted (disabled) swing or travel operation has been performed. If performed, the process proceeds to step B7, and if not, the process returns to step B4.

In step B7, the video recording trigger (disabled operation) is enabled for t seconds, and the process returns to step B4.

In step B8, the operation control section 35 enables, via the on-vehicle network 24, the swing and travel operations performed by the operator. Thereafter, the operator unlocks the gate lock device 29, so that the actual operation of the construction machine can be performed. Afterwards, the flow starting from step B1 is repeated until the power of the vehicle body is turned off.

According to the present embodiment, in the construction machine that performs control of restricting the vehicle body operation upon detection of an object by the object detection sensor, video recording is enabled at timing of operation potentially contacting a person in the surroundings being performed.

According to the embodiment of the present invention described above, the following function and effect are produced.
(1) The video recording device according to the present invention is a video recording device that records video data acquired by a camera attached to a vehicle body of a construction machine, the video recording device including: a recording section where the video data is transitorily or non-transitorily recorded; a trigger determination section that determines whether a video recording trigger is enabled; and a video recording management section that non-transitorily records, in the recording section, the video data for a predetermined period of time before and after a point in time when the video recording trigger is enabled, of the video data transitorily recorded in the recording section, when it is determined that the video recording trigger is enabled, in which the trigger determination section is configured to determine that the video recording trigger is enabled when an object is detected by an object detection sensor attached to the vehicle body and a predetermined operation performed on the construction machine is restricted.
   With the aforementioned configuration, the video recording trigger is enabled at appropriate timing, which can improve the close call extraction accuracy.
(2) The trigger determination section determines that the video recording trigger is enabled when the predetermined operation is performed on the construction machine while the predetermined operation performed on the construction machine is restricted. Thus, for example, when it is assumed that the object detection sensor has detected a person or the like present in a blind spot of an operator and the operations are disabled while the operator performs swing/travel operation without noticing such a situation, the swing/travel operations are performed if the operations remain enabled. Such a case could potentially harm the detected person, that is, a so-called close call incident could occur. Therefore, such a situation is recorded as video, so that measures to be subsequently taken can be prepared.
(3) The video recording management section non-transitorily records, in the recording section, operation information on the construction machine in sync with the video data, together with the video data. This makes it possible to analyze in more detail the situation of a close call upon occurrence.
(4) The video recording management section further non-transitorily records, in the recording section, position information on the construction machine at the point in time when the video recording trigger is enabled. This makes it possible to associate the frequency of occurrence and the position of occurrence of close calls, which enables a flexible response to be made on sites.
(5) A communication section is further included and the video recording management section further non-transitorily records, in the recording section, operation information on the construction machine in sync with the video data and position information on the construction machine at the point in time when the video recording trigger is enabled, together with the video data, and the communication section can upload, on an external server via the Internet, the video data, the operation information, and the position information that are recorded. This allows an operator at a remote location to monitor in real time the occurrence situation of a close call.

Note that the present invention is not limited to the aforementioned embodiment and various modifications are available. For example, the example in which the vehicle body operation is disabled upon detection of an object by the object detection sensor has been described, but the operations may be restricted to slow the vehicle body operation as described above.

### Industrial Applicability

The present invention is used at an operation site of a construction machine on which an object detection device is mounted.

### Reference Signs List

- 18: Camera
- 19: Object detection sensor
- 21: Vehicle body controller
- 23: Video recording device
- 31: Video recording management section
- 32: Trigger determination section
- 33: Recording section

## Claims

1. A video recording device that records video data acquired by a camera attached to a vehicle body of a construction machine, the video recording device comprising:
a recording section where the video data is transitorily or non-transitorily recorded;
a trigger determination section that determines whether a video recording trigger is enabled; and
a video recording management section that non-transitorily records, in the recording section, the video data for a predetermined period of time before and after a point in time when the video recording trigger is enabled, of the video data transitorily recorded in the recording section, when it is determined that the video recording trigger is enabled,
wherein the trigger determination section is configured to determine that the video recording trigger is enabled when an object is detected by an object detection sensor attached to the vehicle body and a predetermined operation performed on the construction machine is restricted.

2. The video recording device according to claim 1, wherein the trigger determination section determines that the video recording trigger is enabled when the predetermined operation is performed on the construction machine while the predetermined operation performed on the construction machine is restricted.

3. The video recording device according to claim 1, wherein the video recording management section non-transitorily records, in the recording section, operation information on the construction machine in sync with the video data, together with the video data.

4. The video recording device according to claim 1, wherein the video recording management section further non-transitorily records, in the recording section, position information on the construction machine at the point in time when the video recording trigger is enabled.

5. The video recording device according to claim 1, further comprising a communication section,
wherein
the video recording management section further non-transitorily records, in the recording section, operation information on the construction machine in sync with the video data and position information on the construction machine at the point in time when the video recording trigger is enabled, together with the video data, and
the communication section can upload, on an external server via an internet, the video data, the operation information, and the position information that are recorded.
